# EUROPÄISCHE PATENTSCHRIFT

(11) **EP 4 247 685 B1**
(45) Veröffentlichungstag und Bekanntmachung des Hinweises auf die Patenterteilung: **09.10.2024**
(21) Anmeldenummer: 21805920.2
(22) Anmeldetag: 03.11.2021
(51) Int. Cl.: B60W 50/02, B60T 13/74, B60T 7/08, B60T 7/10

(54) **STEUERVERFAHREN ZUM VERSTELLEN EINER ELEKTROMECHANISCHEN FESTSTELLBREMSE**
CONTROL METHOD FOR OPERATING AN ELECTROMECHANICAL PARKING BRAKE
MÉTHODE DE COMMANDE D'UN FREIN DE PARKING ELECTROMÉCANIQUE

(30) Priorität: 19.11.2020 DE 102020214600
(43) Veröffentlichungstag der Anmeldung: 27.09.2023
(73) Patentinhaber: Robert Bosch GmbH, 70442 Stuttgart (DE)
(72) Erfinder: BAEHRLE-MILLER, Frank, 71101 Schoenaich (DE); PARASHIVAMURTHY, Vivek, Bangalore 560069 (IN); MADHU, Halebeedu Prasanna, Bengaluru, Karnataka 560068 (IN)
(86) Internationale Anmeldenummer: PCT/EP2021/080444
(87) Internationale Veröffentlichungsnummer: WO 2022/106195

(56) Entgegenhaltungen:
- DE-A1- 102004 060 454
- DE-A1- 102018 103 181
- DE-B3- 10 355 997

## Beschreibung

Die vorliegende Erfindung betrifft ein Steuerverfahren zum Verstellen einer elektromechanischen Feststellbremse sowie ein System, welches zur Durchführung dieses Verfahrens eingerichtet bzw. programmiert ist.

In modernen Kraftfahrzeugen kommen elektromechanische Feststellbremsen zum Einsatz, um ein Wegrollen des abgestellten Fahrzeugs, insbesondere nach dem Abstellen auf einer Fahrbahn mit geneigter Fahrbahnoberfläche, auszuschließen. Hierzu kann ein steuerbarer elektrischer Aktuator der elektromechanischen Feststellbremse im Zuge eines Verriegelungsvorgangs in eine Verriegelungsstellung verstellt werden, in welcher ein fest mit dem Aktuator verbundener Bremssattel, der wenigstens einen Bremsbelag umfasst, durch mechanischen Kontakt mit einer fest am Rad des Kraftfahrzeugs angeordnet Bremsscheibe eine Drehbewegung des Rads blockiert. Im Zuge eines Entriegelungsvorgangs der Feststellbremse kann der Aktuator von der Verriegelungsstellung in eine Entriegelungsstellung weg bewegt werden, in welcher der Bremssattel im Abstand zur Bremsscheibe angeordnet ist und somit die Drehbewegung des Rads freigibt.

Um sicherzustellen, dass Steuersysteme für Bremsen - im Folgenden als "Bremssteuerungseinrichtung" bezeichnet - mit elektromechanischen Feststellbremsen unterschiedlicher Hersteller kompatibel sind, ist es bekannt, den verstellbaren Aktuator mittels eines Mikrokontrollers - im Folgenden als "Aktuator-Steuerungseinheit" bezeichnet -, anzusteuern, der speziell an den jeweiligen Aktuator und somit die elektromechanische Feststellbremse angepasst ist. Zur Steuerung des Aktuators über die Aktuator-Steuerungseinheit durch die Bremssteuerungseinrichtung stehen die Bremssteuerungseinrichtung und die Aktuator-Steuerungseinheit miteinander in Kommunikationsverbindung. Somit werden Kompatibilitätsprobleme zwischen dem Bremssystem und der eigentlichen elektromechanischen Feststellbremse vermieden.

Für eine korrekte Ansteuerung und Verstellung des Aktuators ist es üblich, die momentane Aktuatorposition in Form sogenannter Positionsdaten in eine nichtflüchtige beschreibbare Speichereinheit zu schreiben und dort bei Bedarf wieder auszulesen.

Aus dem Stand der Technik offenlegen DE 103 55 997 B3 und DE 10 2004 060454 A1 jeweils Verfahren, um eine Feststellbremse anzusteuern, wobei Parameter nichtflüchtig gespeichert werden. DE 10 2018 103181 A1 offenlegt Systeme und Verfahren zur Erkennung von Sicherheitsverletzungen bei Fahrzeugkommunikationssystemen, u.a. auch bei der Feststellbremse, wobei Systemauslegungen nichtflüchtig gespeichert werden.

Als problematisch erweist sich dabei jedoch oftmals, dass es beim Schreiben der Positionsdaten in die Speichereinheit zu Schreibverzögerungen und damit verbunden auch zu einer unerwünschten verzögerten Ansteuerung des Aktuators durch die Aktuator-Steuerungseinheit kommen kann. Oftmals wird in einem solchen Fall der Bremssteuerungseinrichtung von der Aktuator-Steuerungseinheit ein Fehler gemeldet, wenn der Schreibvorgang in die Speichereinheit zu lange gedauert hat und insbesondere nicht innerhalb eines vorgegebenen Zeitintervalls erfolgreich abgeschlossen werden konnte. Eine solche Fehlermeldung wiederum wird von der Bremssteuerungseinrichtung in der Regel an den Fahrer des Kraftfahrzeugs weitergegeben. Um diese Fehlermeldung wieder aus dem Fehlerspeicher zu löschen, kann es erforderlich sein, dass der Fahrer des Kraftfahrzeugs mit der Feststellbremse das Antriebssystem - bei Kraftfahrzeugen mit Brennkraftmaschine deren Zündung - ausschaltet und wieder einschaltet und bis dahin die Verstellung des Aktuators blockiert ist, so dass die Feststellbremse währenddessen insbesondere nicht entriegelt oder verriegelt werden kann.

Dies erweist sich für den Fahrer des Kraftfahrzeugs als äußerst unpraktisch.

Es ist daher eine Aufgabe der vorliegenden Erfindung, ein Verfahren zur Ansteuerung einer elektromechanischen Feststellbremse zu schaffen, welcher voranstehend erläuterten Problematik Rechnung trägt.

Diese Aufgabe wird durch den Gegenstand der unabhängigen Patentansprüche 1 und 9 gelöst. Bevorzugte Ausführungsformen sind Gegenstand der abhängigen Patentansprüche.

Grundidee der Erfindung ist demnach, die Ansteuerung des Aktuators einer elektromechanischen Feststellbremse nicht zu unterbrechen, wenn beim Schreiben von Positionsdaten, die die momentane Position des Aktuators wiedergeben, in eine Speichereinheit ein Schreibfehler auftritt, sondern vielmehr die Ansteuerung des Aktuators und somit dessen Verstellung trotz Fehler beim Schreiben der aktuellen Positionsdaten des Aktuators in die Speichereinheit fortzusetzen. Erfindungsgemäß wird vorgeschlagen, bei Auftreten eines solchen Schreibfehlers bzw. Verzögerungen im Schreibvorgang parallel oder nachträglich zur Ansteuerung bzw. Verstellung des Aktuators in der Speichereinheit einen Synchronisationsvorgang auszuführen, sodass spätestens nach Ende dieses Synchronisationsvorgangs sichergestellt ist, dass die in der Speichereinheit abgelegten Positionsdaten die momentane Aktuatorposition des Aktuators korrekt wiedergeben.

Auf diese Weise werden oben erwähnte, unerwünschte Fehlermeldungen an den Fahrer, ausgelöst durch Fehler bzw. durch Verzögerungen beim Schreiben von Positionsdaten in die Speichereinheit, vermieden. Ebenso wird eine unerwünschte Unterbrechung des Verstellens des Aktuators verhindert. Im Ergebnis kann somit die Verstellung des Aktuators, wie vom Fahrer über die Bremssteuereinrichtung angefordert, schnell und insbesondere ohne Erzeugung einer Fehlermeldung an den Fahrer erfolgen. Dies führt zu einer verbesserten Betriebssicherheit beim Verstellen und somit auch beim Entriegeln bzw. Verriegeln der elektromechanischen Feststellbremse.

Beim erfindungsgemäßen Steuerverfahren zum Verstellen einer elektromechanischen Feststellbremse wird ein Aktuator der Feststellbremse durch Ansteuerung mittels einer Aktuator-Steuerungseinheit verstellt. Hierzu wird eine beschreibbare, nichtflüchtige Speichereinheit verwendet, in welcher Positionsdaten betreffend die momentane Aktuatorposition des Aktuators les- und schreibbar gespeichert sind. Gemäß dem Verfahren wird bei Auftreten eines Schreibfehlers bzw. einer Schreibverzögerung beim Schreiben der Positionsdaten in die Speichereinheit die Ansteuerung des Aktuators zum Verstellen desselben nicht unterbrochen, sondern fortgesetzt. Erfindungsgemäß wird bei Erkennen des Schreibfehlers bzw. der Schreibverzögerung unabhängig von der Ansteuerung des Aktuators ein Synchronisationsvorgang ausgeführt, mittels welchem sichergestellt wird, dass die in der Speichereinheit abgelegten Positionsdaten die Aktuatorposition des Aktuators korrekt wiedergeben.

Gemäß einer bevorzugten Ausführungsform erfolgt der Synchronisationsvorgang zeitlich parallel zur Ansteuerung bzw. Verstellung des Aktuators. Auf diese Weise wird der Verstell-Vorgang des Aktuators nicht unterbrochen, sodass das Fahrzeug mit der elektrischen Feststellbremse schnell entriegelt oder verriegelt werden kann. Insbesondere werden unerwünschte Verzögerungen beim Entriegeln bzw. Verriegeln der Feststellbremse verhindert.

Gemäß einer vorteilhaften Weiterbildung verwendet das Verfahren wenigstens einen die Gültigkeit der momentan in der Speichereinheit abgelegten Positionsdaten beschreibenden Markierungsparameter, der einen Default-Wert und wenigstens einen davon abweichenden Markierungs-Wert annehmen kann. Auf diese Weise kann jederzeit festgelegt und abgefragt werden, ob die in der Speichereinheit abgelegten Positionsdaten die momentane Aktuatorposition korrekt wiedergeben oder nicht. Dies erleichtert die korrekte Durchführung des Verstell-Vorgangs des Aktuators und auch des Synchronisationsvorgangs zum Synchronisieren der in der Speichereinheit gespeicherten Positionsdaten. Insbesondere wird vermieden, dass mit nicht korrekten Positionsdaten gearbeitet wird, was zu Fehlern bei der Verstellung des Aktuators führen könnte.

Gemäß einer vorteilhaften Weiterbildung ist oder wird der Markierungsparameter vom Default-Wert in einen ersten oder zweiten Markierungswert geändert, wenn bei einem Schreibvorgang der Positionsdaten in die Speichereinheit ein Fehler aufgetreten ist. Auf diese Weise kann zum einen erkannt werden, dass der erfindungswesentliche Synchronisationsvorgang noch durchzuführen ist. Zum anderen kann durch Auslesen des ersten Markierungswerts erkannt werden, dass bis zum erfolgreichen Abschluss des Synchronisationsvorgangs die momentan in der Speichereinheit abgelegten Positionsdaten nicht verwendet werden dürfen, da aufgrund des aufgetretenen Fehlers beim Schreibvorgang der Positionsdaten nicht sichergestellt ist, dass diese die momentane Aktuatorposition des Aktuators korrekt wiedergeben.

Zweckmäßig wird beim erfindungsgemäßen Verfahren der Schreibvorgang zumindest dann als fehlerhaft eingestuft und der Markierungsparameter in den ersten Markierungswert geändert, wenn eine vorbestimmte maximale Zeitdauer für die Durchführung des Schreibvorgangs überschritten wurde.

Ebenso zweckmäßig wird beim erfindungsgemäßen Verfahren vor Beginn des Schreibvorgangs der Markierungsparameter in den zweiten Markierungswert geändert, so dass auf diese Weise eine unerwartete elektrische Unterbrechung der elektrischen Leistungszufuhr an den Aktuator erkannt werden kann.

Gemäß einer vorteilhaften Weiterbildung des Verfahrens wird nach Ende des Schreibvorgangs der erste Markierungsparameter in den Default-Wert geändert.

Da zu Beginn eines Schreibvorgangs der Markierungsparameter auf den zweiten Markierungswert gesetzt und nach Abschluss des Schreibvorgangs auf den Default-Wert zurückgesetzt wird, bedeutet das Vorliegen des zweiten Markierungswerts zu einem anderen Zeitpunkt als während eines Schreibvorgangs, insbesondere bei Abfrage des Markierungsparameters zu Beginn des Verfahrens, dass der Schreibvorgang aufgrund einer Unterbrechung der elektrischen Stromzufuhr unterbrochen wurde.

Die Erfindung betrifft ferner ein System mit einem steuerbaren Aktuator für eine elektromechanische Feststellbremse, der zwischen einer Verriegelungsposition und einer Entriegelungsposition verstellbar ist. Das System umfasst eine Aktuator-Steuerungseinheit zum Steuern des Aktuators. Das System umfasst ferner eine Bremssteuerungseinrichtung zum Ausführen eines Computerprogrammprodukts, die mittels einer Kommunikationsverbindung mit der Aktuator-Steuerungseinheit kommuniziert. Das System ist zur Durchführung des voranstehend erläuterten erfindungsgemäßen Verfahrens eingerichtet bzw. programmiert, so dass sich die voranstehend erläuterten Vorteile des erfindungsgemäßen Verfahren auf das erfindungsgemäße System übertragen.

Weitere wichtige Merkmale und Vorteile der Erfindung ergeben sich aus den Unteransprüchen, aus der Zeichnung und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: beispielhaft den Aufbau eines erfindungsgemäßen Systems,
- Fig. 2: ein das erfindungsgemäße Verfahren erläuterndes Ablaufdiagramm.

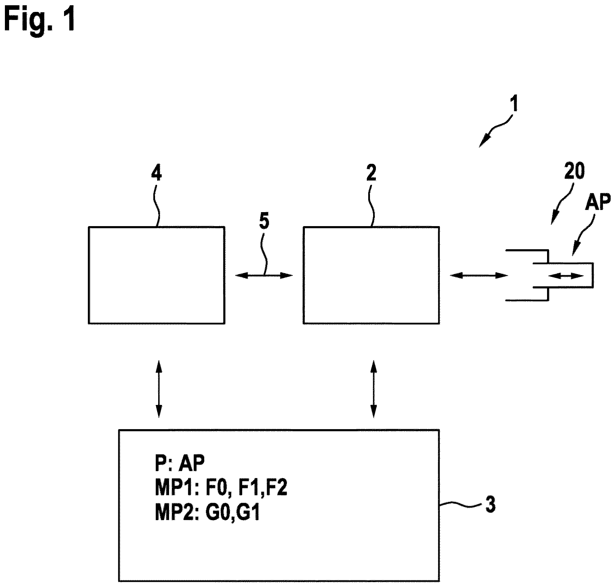

Figur 1 illustriert schematisch den Aufbau eines erfindungsgemäßen Systems 1. Das System 1 umfasst eine Aktuator-Steuerungseinheit 2, mittels welcher ein Aktuator 20 der in Figur 1 nicht näher dargestellten Feststellbremse zwischen verschiedenen Aktuator-Positionen verstellt werden kann. Insbesondere kann der Aktuator 20 zwischen einer Verriegelungsposition und einer Entriegelungsposition verstellt werden, wobei der Aktuator grundsätzlich auch in eine beliebige Anzahl von Zwischenpositionen zwischen der Verriegelungsposition und der Entriegelungsposition verstellt werden kann. Des Weiteren umfasst das System 1 eine beschreibbare, nicht flüchtige Speichereinheit 3. In der Speichereinheit 3 können Positionsdaten P abgelegt werden, welche die vom Aktuator 20 momentan eingenommene Aktuatorposition AP beschreiben.

Des Weiteren umfasst das System 1 eine Bremssteuerungseinrichtung 4, in welcher ein Computerprogrammprodukt ausgeführt werden kann. Eine solche Bremssteuerungseinrichtung 4 kann im vorliegenden System als so genannter "Host" fungieren, der u.a. zum Betrieb der Feststellbremse erforderliche Hardware bereitstellt. In der Bremssteuerungseinrichtung 4 ist das Computerprogrammprodukt ausführbar, mittels welchem indirekt - durch Ansteuerung der Aktuator-Steuerungseinheit 2 - der Aktuator 20 angesteuert und auf diese Weise verstellt werden kann.

Im Zuge einer solchen Ansteuerung des Aktuators 20 können die Bremssteuerungseinrichtung 4 und die Aktuator-Steuerungseinheit 2 über eine Kommunikationsverbindung 5 miteinander datenaustauschend kommunizieren. Dies geschieht beispielsweise, wenn die Feststellbremse verriegelt und hierzu der Aktuator 20 von der Entriegelungsposition in die Verriegelungsposition verstellt werden soll. In diesem Fall fordert das in der Bremssteuerungseinrichtung 4 ausgeführte Computerprogrammprodukt über die Kommunikationsverbindung 5 von der Aktuator-Steuerungseinheit 2 eine solche Verstellung des Aktuators 20 an.

Beim Verstellen des Aktuators 20 ändert sich kontinuierlich die momentane Aktuatorposition AP. Der Wert der sich während der Verstellung ständig ändernden momentanen Aktuatorposition AP wird als Positionsdaten P von der Aktuator-Steuerungseinheit 2 in die Speichereinheit 3 geschrieben.

Bei herkömmlichen Systemen kann es zu Verzögerungen beim Schreibvorgang und - damit einhergehend - zu einer verzögerten Ansteuerung des Aktuators 20 kommen, da das Verstellen des Aktuators 20 nicht unabhängig vom Schreiben der momentanen Aktuatorposition AP in die Speichereinheit 3 und insbesondere nicht zeitlich parallel zu diesem Schreibvorgang erfolgt.

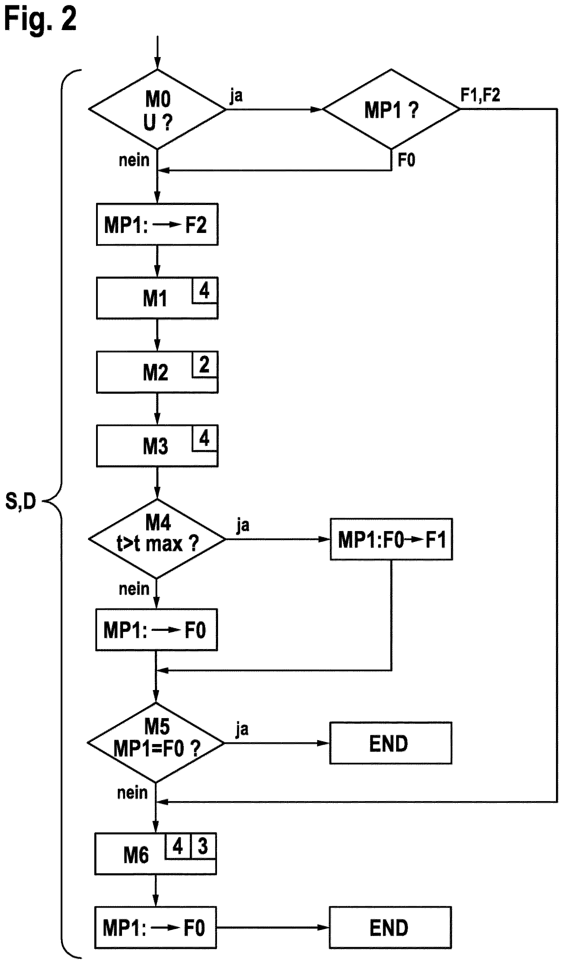

Wie die Darstellung der Figur 2 veranschaulicht, welche einen Durchlauf D des erfindungsgemäßen Verfahrens schematisch illustriert, werden beim erfindungsgemäßen Verfahren die in der Speichereinheit 3 abgelegten Positionsdaten P unabhängig vom Verstellen des Aktuators 20 synchronisiert, d.h. der Durchlauf D umfasst einen Synchronisationsvorgang S für die Positionsdaten P mit der tatsächlichen Aktuatorposition AP des Aktuators 20. Mittels eines solchen Synchronisationsvorgangs S wird sichergestellt, dass in der Speichereinheit 3 abgelegten Positionsdaten P die Aktuatorposition AP richtig wiedergeben. Dies gilt auch bzw. insbesondere, wenn es zu Verzögerungen beim Schreibvorgang oder Fehlern beim Schreibvorgang kommt, etwa, weil das Ablegen, also Speichern der Positionsdaten P in der Speichereinheit 3 neu organisiert wird. Beim erfindungsgemäßen Verfahren werden die in der Speichereinheit 3 momentan abgelegten Positionsdaten P also aktualisiert, während die Ansteuerung und somit die Verstellung des Aktuators 20 fortgesetzt wird. Insbesondere wird bei Auftreten eines Schreibfehlers beim Schreiben der Positionsdaten P in die Speichereinheit 3 die Ansteuerung des Aktuators 20 zum Verstellen durch die Aktuator-Steuerungseinheit 2 nicht unterbrochen, sondern fortgesetzt. Die Synchronisation der Positionsdaten P und die Ansteuerung bzw. Verstellung des Aktuators 20 können dabei zeitlich parallel zueinander erfolgen.

Im gezeigten Durchlauf D des Verfahrens wird gemäß dem Beispielszenario der Figur 2 ein Markierungsparameter MP1 verwendet, welcher ebenso wie die Positionsdaten P lesbar und schreibbar, also veränderbar, in der Speichereinheit 3 abgelegt werden kann und welcher die Gültigkeit der aktuell in der Speichereinheit 3 abgelegten Positionsdaten P charakterisiert. Hierzu kann der Markierungsparameter MP1 verschiedene Werte und zwar einen Default-Wert F0 sowie zwei vom Default-Wert F0 abweichende Markierungswerte - im Folgenden als erster und zweiter Markierungswert F1 bzw. F2 bezeichnet - aufweisen.

Für den Fall, dass keinerlei Schreibfehler vorliegt oder zumindest kein Schreibfehler in die Speichereinheit 3 erkannt wurde und somit die zuletzt geschriebenen Positionsdaten P die aktuelle Aktuatorposition AP des Aktuators 20 korrekt wiedergeben, wird der Markierungsparameter MP1 im Zuge des Verfahrens auf den Default-Wert F0 gesetzt. Der erste Markierungswert F1 spiegelt demgegenüber wieder, dass beim Schreibvorgang ein Time-Out-Fehler aufgetreten ist. Da zu Beginn eines Schreibvorgangs der Markierungsparameter MP1 auf den zweiten Markierungswert F2 gesetzt und nach Abschluss des Schreibvorgangs auf den Default-Wert F0 zurückgesetzt wird, bedeutet das Vorliegen des zweiten Markierungswerts F2 zu einem anderen Zeitpunkt als während eines Schreibvorgangs, insbesondere bei Abfrage des Markierungsparameters MP1 zu Beginn des Verfahrens, dass der Schreibvorgang aufgrund einer Unterbrechung der elektrischen Stromzufuhr unterbrochen wurde.

Im Folgenden wird nun der erwähnte Durchlauf D des erfindungsgemäßen Verfahrens anhand des Ablaufdiagramms der Figur 2 genauer erläutert. Es versteht sich, dass das Verfahren iterativ durchgeführt werden kann, wozu mehrere Durchläufe D aneinander gereiht werden können. Es wird beispielhaft angenommen, dass als Antriebsaggregat des Kraftfahrzeugs eine Brennkraftmaschine dient.

Zu Beginn des Durchlaufs D wird gemäß einer Maßnahme M0 überprüft, ob während des vorangehenden Zündungszyklus der Brennkraftmaschine eine unerwartete Unterbrechung U der elektrischen Leistungszufuhr erfolgt ist. Trifft dies zu, so wird der Markierungsparameter MP1 abgefragt. Ergibt die Abfrage, dass dieser den Wert F0 aufweist, so werden die gespeicherten Positionsdaten P als gültig eingestuft.

Ist der Markierungsparameter MP1 hingegen auf den ersten Markierungswert F1 gesetzt, so bedeutet dies, dass zwar keine Unterbrechung der Stromzufuhr stattgefunden hat, jedoch dennoch ein Schreibfehler in Form eines Time-Outs aufgetreten ist, und die gespeicherten Positionsdaten P werden als ungültig eingestuft. Ist der Markierungsparameter MP1 auf den zweiten Markierungswert F2 gesetzt, so bedeutet dies, dass im vorangehenden Zündungszyklus während des Schreibvorgangs der Positionsdaten P eine Unterbrechung U der elektrischen Leistungszufuhr stattgefunden hat.

Auch in diesem Fall werden die Positionsdaten P als ungültig eingestuft.

Ergibt voranstehende Überprüfung gemäß Maßnahme M0, dass der Markierungsparameter MP1 auf den ersten oder zweiten Markierungswert F1, F2 gesetzt ist, so wird das Verfahren mit der noch zu erläuternden Maßnahme M6 fortgesetzt, d.h. die ebenfalls noch zu erläuternden Maßnahmen M2 bis M5 werden übersprungen.

Ergibt hingegen voranstehende Überprüfung gemäß Maßnahme M0, dass der Markierungsparameter MP1 auf den Default-Wert F0 gesetzt ist, so wird der Markierungsparameter auf den Wert F2 gesetzt, was bedeutet, dass in der Folge ein Schreibvorgang ausgeführt werden wird.

In einer darauf folgenden Maßnahme M1 wird von der Bremssteuerungseinrichtung 4 über die Kommunikationsverbindung 5 von der Aktuator-Steuerungseinheit 2 eine Verstellbewegung des Aktuator 20, beispielsweise von der Entriegelungsposition in die Verriegelungsposition, angefordert.

In Reaktion auf Maßnahme M1 wird in einer auf Maßnahme M1 folgenden Maßnahme M2 die Bremssteuerungseinrichtung 4 über die Kommunikationsverbindung 5 von der Aktuator-Steuerungseinheit 2 aufgefordert, die in der Speichereinheit 3 abgelegten Positionsdaten P entsprechend der sich beim Verstellen des Aktuators 20 ergebenden Veränderung der Aktuatorposition AP anzupassen, was im Zuge einer auf Maßnahme M2 folgenden Maßnahme M3 des erfindungsgemäßen Verfahrens erfolgt.

Im Zuge einer auf Maßnahme M3 folgenden Maßnahme M4 des Verfahrens wird geprüft, ob beim Schreibvorgang der geänderten Positionsdaten P in die Speichereinheit 3 ein Fehler aufgetreten ist. Der Schreibvorgang wird dabei als fehlerhaft eingestuft, wenn eine vorbestimmte maximale Zeitdauer tₘₐₓ für die Durchführung des Schreibvorgangs überschritten wurde. Ist dies der Fall, so wird der Markierungsparameter MP1 im Zuge von Maßnahme M4 vom zweiten Markierungswert F2 in den ersten Markierungswert F1 geändert, wenn beim Schreibvorgang der geänderten Positionsdaten P in die Speichereinheit 3 ein Fehler aufgetreten ist. Ist beim Schreibvorgang kein Fehler aufgetreten, so wird der Markierungsparameter MP1 im Zuge von Maßnahme M4 vom zweiten Markierungswert F2 in den Default-Wert F0 geändert

Unabhängig davon, ob der Schreibvorgang als fehlerhaft eingestuft wird oder nicht, wird die Ansteuerung des Aktuators 20 durch die Aktuator-Steuerungseinheit 2 fortgesetzt.

Wird kein Fehler erkannt, so wird der Markierungsparameter MP1 im Anschluss an Maßnahme M4 wieder auf den Default-Wert F0 zurückgesetzt.

In einer weiteren Maßnahme M5 wird der Wert des Markierungsparameters MP1 abgefragt. Ergibt sich, dass dieser auf den Default-Wert F0 gesetzt ist, was bedeutet, dass der zuvor durchgeführte Schreibvorgang erfolgreich abgeschlossen werden konnte und die gespeicherten Positionsdaten P gültig sind, so wird der aktuelle Durchlauf D des Verfahrens beendet. Ist der Markierungsparameter MP1 hingegen auf den ersten Markierungswert F1 oder auf den zweiten Markierungswert MP2 gesetzt, so erfolgt gemäß einer weiteren Maßnahme M6 eine erneute Anpassung der gespeicherten Positionsdaten P an die momentane Aktuatorposition AP, so dass danach die in der Speichereinheit 3 abgelegten Positionsdaten P gültig sind und die momentane Aktuatorposition AP korrekt wiedergeben. Anschließend wird der Markierungsparameter MP1 auf den Default-Wert F0 gesetzt und das Verfahren beendet.

## Patentansprüche

1. Steuerverfahren zum Verstellen einer elektromechanischen Feststellbremse,
- gemäß welchem ein Aktuator (20) der Feststellbremse durch Ansteuerung mittels einer Aktuator-Steuerungseinheit (2) verstellt wird,
- wobei eine beschreibbare, nichtflüchtige Speichereinheit (3) vorgesehen ist, in welcher Positionsdaten (P) betreffend die momentane Aktuatorposition (AP) des Aktuators (20) lesbar und schreibbar gespeichert sind;
- gemäß welchem bei Auftreten eines Schreibfehlers oder beim Schreiben der Positionsdaten (P) in die Speichereinheit (3) die Ansteuerung des Aktuators (20) zum Verstellen desselben fortgesetzt wird,
- gemäß welchem bei Erkennen des Schreibfehlers unabhängig von der Ansteuerung des Aktuators (20) ein Synchronisationsvorgang (S) ausgeführt wird, so dass nach Abschluss dieses Synchronisationsvorgangs (S) die in der Speichereinheit (3) abgelegten Positionsdaten (P) die Aktuatorposition (AP) des Aktuators (20) korrekt wiedergeben.

2. Verfahren nach Anspruch 1,
**dadurch gekennzeichnet, dass**
der Synchronisationsvorgang (S) zeitlich parallel zur Ansteuerung des Aktuators (20) erfolgt.

3. Verfahren nach Anspruch 1 oder 2,
**dadurch gekennzeichnet, dass**
das Verfahren wenigstens einen die Gültigkeit der momentan in der Speichereinheit (3) abgelegten Positionsdaten (P) charakterisierenden Markierungsparameter (MP1) verwendet, der einen Default-Wert (F0) und wenigstens einen davon abweichenden Markierungs-Wert (F1, F2) annehmen kann.

4. Verfahren nach Anspruch 3,
**dadurch gekennzeichnet, dass**
der Markierungsparameter (MP1) vom Default-Wert (F0) in einen ersten Markierungswert (F1) oder zweiten Markierungswert (F2) geändert wird, wenn beim einem Schreibvorgang der Positionsdaten (P) in die Speichereinheit (3) ein Fehler aufgetreten ist.

5. Verfahren nach Anspruch 4,
**dadurch gekennzeichnet, dass**
der Schreibvorgang als fehlerhaft eingestuft und der Markierungsparameter (MP1) in den ersten Markierungswert (F1) geändert wird, wenn eine vorbestimmte maximale Zeitdauer (tₘₐₓ) für die Durchführung des Schreibvorgangs überschritten wurde.

6. Verfahren nach Anspruch 4 oder 5,
**dadurch gekennzeichnet, dass**
vor Beginn des Schreibvorgangs der Markierungsparameter (MP1) in den zweiten Markierungswert (F2) geändert wird, so dass auf diese Weise eine unerwartete elektrische Unterbrechung (U) der elektrischen Leistungszufuhr an den Aktuator (20) erkannt werden kann.

7. Verfahren nach Anspruch 6,
**dadurch gekennzeichnet, dass**
nach Ende des Schreibvorgangs der Markierungsparameter (MP1) in den Default-Wert (F0) geändert wird.

8. Verfahren nach einem der vorhergehenden Ansprüche,
**dadurch gekennzeichnet, dass**
zu Beginn des Verfahrens durch Abfrage des Markierungsparameters (MP1) überprüft wird, ob in der Speichereinheit (3) gültige Positionsdaten (P) vorliegen oder nicht und, falls keine gültigen Positionsdaten (P) vorliegen, eine (erneute) Anpassung der gespeicherten Positionsdaten (P) an die momentane Aktuatorposition (AP) erfolgt.

9. System (1),
- mit einem steuerbaren Aktuator (20) für eine elektromechanische Feststellbremse, der zwischen einer Verriegelungsposition und einer Entriegelungsposition verstellbar ist;
- mit einer Aktuator-Steuerungseinheit (2) zum Steuern des Aktuators (20);
- mit einer Bremssteuerungseinrichtung (4) zum Ausführen eines Computerprogrammprodukts, die mittels einer Kommunikationsverbindung (5) mit der Aktuator-Steuerungseinheit (2) kommuniziert;
- **dadurch gekennzeichnet, dass** das System (1) zur Durchführung des Verfahrens nach einem der vorhergehenden Ansprüche eingerichtet/programmiert ist.

## Claims

1. Control method for adjusting an electromechanical parking brake,
- according to which an actuator (20) of the parking brake is adjusted by virtue of actuation by means of an actuator control unit (2),
- wherein a writable, non-volatile memory unit (3) is provided and stores position data (P) relating to the current actuator position (AP) of the actuator (20) in a readable and writable form;
- according to which the actuation of the actuator (20) for adjusting the latter is continued if a write error occurs or when writing the position data (P) to the memory unit (3),
- according to which a synchronization process (S) is carried out independently of the actuation of the actuator (20) if the write error is detected, with the result that the position data (P) stored in the memory unit (3) correctly reflect the actuator position (AP) of the actuator (20) after this synchronization process (S) has been completed.

2. Method according to Claim 1,
**characterized in that**
the synchronization process (S) takes place in parallel with the actuation of the actuator (20) in terms of time.

3. Method according to Claim 1 or 2,
**characterized in that**
the method uses at least one marking parameter (MP1) which characterizes the validity of the position data (P) currently stored in the memory unit (3) and can assume a default value (F0) and at least one marking value (F1, F2) differing from the latter.

4. Method according to Claim 3,
**characterized in that**
the marking parameter (MP1) is changed from the default value (F0) to a first marking value (F1) or a second marking value (F2) if an error has occurred during a process of writing the position data (P) to the memory unit (3).

5. Method according to Claim 4,
**characterized in that**
the writing process is classified as erroneous and the marking parameter (MP1) is changed to the first marking value (F1) if a predetermined maximum period (tₘₐₓ) for carrying out the writing process has been exceeded.

6. Method according to Claim 4 or 5,
**characterized in that**
the marking parameter (MP1) is changed to the second marking value (F2) before the start of the writing process, with the result that an unexpected electrical interruption (U) in the electrical power supply to the actuator (20) can be identified in this manner.

7. Method according to Claim 6,
**characterized in that**
the marking parameter (MP1) is changed to the default value (F0) after the end of the writing process.

8. Method according to one of the preceding claims,
**characterized in that**
a check is carried out at the beginning of the method by querying the marking parameter (MP1) in order to determine whether or not there are valid position data (P) in the memory unit (3) and, if there are no valid position data (P), (renewed) adaptation of the stored position data (P) to the current actuator position (AP) is carried out.

9. System (1)
- having a controllable actuator (20) for an electromechanical parking brake, which actuator can be adjusted between a locked position and an unlocked position;
- having an actuator control unit (2) for controlling the actuator (20);
- having a brake control device (4) for executing a computer program product, which brake control device communicates with the actuator control unit (2) by means of a communication connection (5);
**characterized in that**
- the system (1) is configured/programmed to carry out the method according to one of the preceding claims.

## Revendications

1. Procédé de commande pour le réglage d'un frein de stationnement électromécanique,
- selon lequel un actionneur (20) du frein de stationnement est réglé par commande au moyen d'une unité de commande d'actionneur (2),
- une unité de mémoire (3) non volatile inscriptible étant présente, dans laquelle des données de position (P) concernant la position d'actionneur (AP) momentanée de l'actionneur (20) sont mémorisées de manière à pouvoir être lues et écrites ;
- selon lequel, en cas de survenance d'une erreur d'écriture ou lors de l'écriture des données de position (P) dans l'unité de mémoire (3), la commande de l'actionneur (20) destinée au réglage de celui-ci est poursuivie,
- selon lequel, en cas de reconnaissance de l'erreur d'écriture, une opération de synchronisation (S) est exécutée indépendamment de la commande de l'actionneur (20), de sorte qu'après la fin de cette opération de synchronisation (S), les données de position (P) stockées dans l'unité de mémoire (3) reproduisent correctement la position d'actionneur (AP) de l'actionneur (20).

2. Procédé selon la revendication 1,
**caractérisé en ce que**
l'opération de synchronisation (S) se déroule parallèlement dans le temps avec la commande de l'actionneur (20).

3. Procédé selon la revendication 1 ou 2,
**caractérisé en ce que**
le procédé utilise au moins un paramètre de marquage (MP1) qui caractérise la validité des données de position (P) actuellement stockées dans l'unité de mémoire (3), lequel peut prendre une valeur par défaut (F0) et au moins une valeur de marquage (F1, F2) différente de celle-ci.

4. Procédé selon la revendication 3,
**caractérisé en ce que**
le paramètre de marquage (MP1) est modifié de la valeur par défaut (F0) en une première valeur de marquage (F1) ou une deuxième valeur de marquage (F2) lorsqu'une erreur est survenue lors d'une opération d'écriture des données de position (P) dans l'unité de mémoire (3).

5. Procédé selon la revendication 4,
**caractérisé en ce que**
l'opération d'écriture est classifiée comme erronée et le paramètre de marquage (MP1) est modifié en la première valeur de marquage (F1) lorsqu'une durée maximale (tₘₐₓ) prédéterminée pour l'exécution de l'opération d'écriture a été dépassée.

6. Procédé selon la revendication 4 ou 5,
**caractérisé en ce que**
avant le début de l'opération d'écriture, le paramètre de marquage (MP1) est modifié en la deuxième valeur de marquage (F2), de sorte qu'une interruption (U) électrique inattendue de l'alimentation en puissance électrique vers l'actionneur (20) peut ainsi être reconnue.

7. Procédé selon la revendication 6,
**caractérisé en ce que**
après la fin de l'opération d'écriture, le paramètre de marquage (MP1) est modifié en valeur par défaut (F0).

8. Procédé selon l'une des revendications précédentes,
**caractérisé en ce que**
au début du procédé, un contrôle est effectué par interrogation du paramètre de marquage (MP1) afin de vérifier s'il existe ou non des données de position (P) valides dans l'unité de mémoire (3) et, dans le cas où il n'existe pas de données de position (P) valides, une (nouvelle) adaptation des données de position (P) mémorisées à la position momentanée de l'actionneur (AP) est effectuée.

9. Système (1),
- comprenant un actionneur (20) commandable pour un frein de stationnement électromécanique, qui peut être réglé entre une position de verrouillage et une position de déverrouillage ;
- comprenant une unité de commande d'actionneur (2) destinée à commander l'actionneur (20) ;
- comprenant un dispositif de commande de frein (4) destiné à exécuter un produit de programme informatique, qui communique avec l'unité de commande d'actionneur (2) au moyen d'une liaison de communication (5) ; **caractérisé en ce que**
- le système (1) est conçu/programmé pour mettre en oeuvre le procédé selon l'une des revendications précédentes.
